**Europäisches Patentamt**

**European Patent Office**

**Office européen des brevets**

(19)

(11) Veröffentlichungsnummer: **0 257 349**
**B1**

(12) **EUROPÄISCHE PATENTSCHRIFT**

(45) Veröffentlichungstag der Patentschrift:
03.10.90

(51) Int. Cl.⁵: **F16F 3/00**, B60K 5/12

(21) Anmeldenummer: **87111122.5**

(22) Anmeldetag: **31.07.87**

(54) **Feder.**

(30) Priorität: **25.08.86 DE 3628838**

(43) Veröffentlichungstag der Anmeldung:
**02.03.88 Patentblatt 88/9**

(45) Bekanntmachung des Hinweises auf die Patenterteilung:
**03.10.90 Patentblatt 90/40**

(84) Benannte Vertragsstaaten:
**DE ES FR GB IT SE**

(56) Entgegenhaltungen:
**EP-A- 0 121 834
DE-A- 3 535 897
DE-B- 1 006 673
DE-B- 1 260 884
DE-C- 738 791
GB-A- 618 602
GB-A- 1 410 426
GB-A- 1 602 265
US-A- 2 382 372
US-A- 2 932 474
US-A- 3 089 714
US-A- 3 229 951
US-A- 3 305 227**

(73) Patentinhaber: **WOCO Franz-Josef Wolf & Co.,
Sprudelallee 19, D-6483 Bad Soden-Salmünster(DE)**

(72) Erfinder: **Wolf, Franz-Josef, Sprudelallee 19, D-6483 Bad
Soden-Salmünster(DE)**
Erfinder: **Pletsch, Hubert, Am Quellenrain 13,
D-6483 Bad Soden-Salmünster(DE)**

(74) Vertreter: **Jaeger, Klaus, Dipl.-Chem. Dr. et al, Jaeger,
Steffens & Köster Patentanwälte Pippinplatz 4a,
D-8035 München-Gauting(DE)**

## Beschreibung

Die Erfindung betrifft eine Feder.

Insbesondere betrifft die Erfindung eine weiche Feder, d.h. eine Feder mit besonders flachem Verlauf der Federkennlinie. Beim Einwirken einer bereits relativ geringen Kraft auf die Feder wird diese bereits um einen relativ großen Federweg ausgelenkt.

Während das weiche Abfedern kleiner Massen relativ problemlos ist, stellt das weiche Abfedern größerer Massen den Konstrukteur vor Probleme, die zu Kompromissen zwingen, die meist zu einer Aufgabe der angestrebten weichen Abfederung größerer Massen führen. Die Problematik liegt darin, daß das Ankoppeln großer Massen an weiche Federn bereits bei geringen Beschleunigungen kritsch weite Fedewege mit kritischen Beschleunigungen beim Rückfedern zur Folge haben. So ist es, nur um ein Beispiel zu nennen, im Kraftfahrzeugbau unabhängig von Dämpfungsanforderungen durchaus erwünscht, das Antriebsaggregat eines Kraftfahrzeugs prinzipiell so weich wie möglich zu lagern. Bei Benützung von Lagern mit der angestrebten weichen Federkennung hätte dies jedoch bei nur mäßig welliger Fahrbahn bereits so große Amplituden der Motorblockschwingungen zur Folge, daß dies nicht nur zu ernsten Problemen bei der Kraftübertragung vom Antriebsaggregat auf die Antriebsräder und auf den bloßen Fahrkomfort, sondern unter Umständen auch auf die Fahrstabiltät des Kraftfahrzeugs zur Folge hätte. Dieses Verhalten zwingt dazu, daß die Antriebsaggregate von Kraftfahrzeugen bislang härter gefedert gelagert werden als dies für den Fahrkomfort wünschenswert wäre. Entsprechendes gilt für zahllose andere Lagerprobleme, und zwar sowohl für die Auflagerung als auch für die Hängelagerung, so beispielsweise für die Lagerung ortsfester schwingender Massen, für die Lagerung von Messgeräten und Messtischen ebenso wie für die Lagerung ganzer Industriebauten.

Aus der deutschen Auslegeschrift DE-B 1 260 884 ist ein Puffer für Krananlagen bekannt, der aus drei Einzelfederelementen zusammengesetzt ist. Die Kennlinien dieser drei Pufferelemente, von denen das erste lediglich zur weichen Krafteinleitung dient, während die beiden anderen, in Form von höhlkegelförmigen Knickpuffern, die eigentlichen Tragfedern sind, überlagern sich additiv, bzw. schließen sich einander an. Dadurch ergibt sich ein Last-Federweg-Diagramm, das in etwa die Gestalt eines geneigt liegenden W aufweist.

Durch diese Gestaltung der Federkennlinie soll der Puffer im Anfangsfederungsbereich weich und am Endanschlag hart, aber nicht starr sein. Zudem soll das Arbeitsaufnahmevermögen gegenüber bekannten Puffern größer sein.

Angesichts dieses Standes der Technik liegt der Erfindung die Aufgabe zugrunde, eine Feder zu schaffen, die auch große Massen, genauer gesagt große angreifende Kräfte weich abzufedern vermag, und zwar mit einer Feder-Gesamtauslenkung, d.h. einem Gesamtfederweg, der wesentlich kürzer ist als der Federweg, der für die tatsächlich wirksame weiche Abfederung der einwirkenden Kräfte bzw. der abzufedernden Masse erforderlich wäre.

Diese Aufgabe wird durch eine Feder nach dem Anspruch 1 bzw. ein Verfahren nach dem Anspruch 7 gelöst. Mit anderen Worten, die der Erfindung zugrundeliegende Aufgabe wird dadurch gelöst, daß der lineare Bereich der Federkennlinie, also der eigentliche Arbeitsbereich, in zwei Teilbereiche unterteilt wird, die gegeneinander parallelverschoben sind. Während also die durch die beschleunigte abzufedernde Masse oder Nutzlast die in die Feder bzw. in das Federsystem eingeleitete Energie zu Beginn und gegen Ende der Federverformung weich und zumindest im wesentlichen linear abgefedert wird, wird ein wesentlicher, nicht selten der Hauptanteil der in das System eingeleiteten Energie im mittleren Abschnitt der Federverformung bzw. im mittleren Abschnitt des Federweges ausgesprochen hart abgefedert. Wie diese drei Bereiche im einzelnen quantitativ zu verteilen sind, hängt von den Gegebenheiten und Anforderungen des jeweiligen Anwendungsfalles ab. Vorzugsweise werden ungefähr 30 bis 70, insbesondere 40 bis 60 % der insgesamt bei einem Belastungstakt in die Feder eingeleiteten Energie hart auf nicht mehr als 20 %, vorzugsweise 1 bis 10 % des insgesamt benötigten bzw. beanspruchten Federweges abgefedert, während ungefähr 1 bis 10 % der insgesamt in das Federsystem eingeleiteten Energie in der Anfangsphase der Federverformung, also zu Beginn des Federweges, im linearen Bereich der Kennlinie abgefedert werden.

Bei einer nur gering dampfenden Feder ist die Federkennlinie auch im Überschwingbereich oder Rückschwingbereich, bei einer Druckfeder also auch im Bereich der Dehnung des Federkörpers und bei einer Zugfeder im Bereich der Kontraktion der Feder über die Nullage hinaus, symmetrisch zur Kennlinie der Anfangsbelastung der Feder ausgebildet.

Dieser Kennliniengestaltung bei der Feder gemäß der Erfindung liegt die Erkenntnis zugrunde, daß eine über eine zwischengeschaltete Feder auf ein mit dem Widerlager der Feder verbundenes Bezugssystem hart bis sogar ungefedert übertragene Energie einer angekoppelten beschleunigten Masse sich solange im Bezugssystem praktisch nicht störend bemerkbar macht, wie bei vorgegebener Beschleunigung oder Amplitude die Masse der abzufedernden Nutzlast relativ klein gegenüber der Masse des Bezugssystems ist. Dieser Einfluß macht sich im Bezugssystem erst mit zunehmender Masse der abzufedernden Nutzlast bemerkbar, so daß eigentlich erst in diesem Bereich ein weiches Abfedern der angekoppelten beschleunigten Masse erforderlich ist, wenn auf das Bezugssystem keine merkliche Störung übertragen werden soll.

Um die vorstehende Erörterung an einem Beispiel zu verdeutlichen,sei angenommen, daß ein Kraftfahrzeug, das beispielsweise 1500 kg wiegt, mit einem Motor ausgestattet sei, der selbst lediglich 25 kg wiegt. Bezüglich des Fahr- und Schwingungsverhaltens des Kraftfahrzeuges könnte ein solch kleiner Motor, von Resonanzen abgesehen, in praktisch beliebige Schwingungen versetzt werden, ohne daß dadurch der Fahrkomfort des Kraftfahrzeuges merklich beeinflußt würde. Ist dagegen im gleichen Fahrzeug ein Motor eingebaut, der beispielsweise 100 kg wiegt, der also bereits eine relativ große Masse im Vergleich zum selbst federnd gelagerten Kraftfahrzeug aufweist, so sind die Schwingungen, die ein solcher Motor ausführt, für den Fahrkomfort und die Fahrstabilität eines solchen Kraftfahrzeuges von durchaus beachtlicher Relevanz. Wollte man nun einen solch schweren Motor in der erwünschten Weise weich bis sehr weich,und zwar über den gesamten Arbeitsbereich linear abfedern, so würde der Motor Federwege zurücklegen, bzw. mit einer Amplitude schwingen, die einem Trampolineffekt gleich käme und für den Kraftfahrzeugbau indiskutabel ist. Hier nun schafft die Erfindung dadurch Abhilfe, daß sie nach einem kurzen Vorfederbereich für Schwingungen mit kleinen Amplituden einen großen bis sehr großen Anteil der von der Nutzlast in die Feder eingeleiteten Energie so hart wie möglich und sinnvoll abfedert, wobei sich im einzelnen Anwendungsfall die Größe der solcherart harten abgefederten Energie nach der trägen Masse des am Widerlager der Feder angekoppelten Bezugssystems richtet, die durch den hart abgefederten Energieanteil lediglich eine Anregung erfahren darf und soll, die im Rahmen der gestellten Federaufgabe vernachlässigbar klein ist. Erst anschließend wird dann der Anteil der in die Feder von der Nutzlast eingeleiteten Energie durch die Feder weich abgefedert, der der trägen Masse des Bezugssystems eine merkliche Beschleunigung erteilen würde. Im Ergebnis wird durch das harte Abfedern, also das Abfedern mit kurzem Federweg in dem Umfang, in dem die über die harte Federcharakteristik auf die träge Masse des Bezugssystems übertragene Energie nicht ausreicht, um diese träge Masse störend zu beschleunigen, eine wesentliche Verkürzung des Federweges der im Effekt weich federnden Tragfeder erzielt. Die gegenüber einem durchgehend linearen Kennlinienverlauf erzielbare Federwegverkürzung, die im einzelnen selbstverständlich von den Gegebenheiten des jeweiligen Anwendungsfalles abhängt, wird in der Regel 50 bis 80 % betragen.

Der Fachmann erkennt ohne weiteres, daß die vorstehenden Ausführungen sowohl für den Belastungstakt der Feder als auch, bei entsprechender Auslegung der Feder bzw. des Federsystems für den über die Nullage der Feder in Rückstellrichtung hinausgehenden Überschwingbereich oder Rückschwingbereich gilt.

Das vorstehend beschriebene Verfahren zum Abfedern relativ schwerer Massen bzw. die Realisierung einer Feder mit dem vorstehend im einzelnen beschriebenen Kennlinienverlauf kann prinzipiell auf recht verschiedene Weise erfolgen, wobei sich der Fachmann von den Gegebenheiten und Anforderungen des bestimmten Anwendungsfalles leiten lassen wird.

In einfachster Weise kann ein Federsystem mit einem Sprung im linearen Kennlinienverlauf vorzugsweise durch die Kombination einer weichen Tragfeder mit einer als Knickfeder ausgebildeten Steuerfeder erfolgen, die in der Weise wirkungsparallel zur Tragfeder geschaltet ist, daß eine Ankopplung, in der Regel eine mechanische Mitnahme, erst nach einem vom Anwendungsfall abhängigen ungekoppelten Vorlauf der Tragfeder erfolgt, wobei der Knickpunkt der Knickfeder, also der Federweg der Steuerfeder, bei dem diese ihre Federelastizität praktisch verliert, kleiner bzw. kürzer ist als der Federweg, der den linearen Kennlinienbereich der Tragfeder nach oben hin begrenzt, wobei sämtliche Federwege auf ein und dasselbe System und ein und denselben Nullpunkt des Systems bezogen sind. Dadurch kann die Symmetrie der Federkennlinie über den Nullpunkt des Systems hinaus in den Rückschwingbereich vorzugsweise dadurch realisiert werden, daß symmetrisch zur vorstehend beschriebenen ersten Steuerfeder eine zweite rückwärtige Steuerfeder mit identischen Kenndaten zur ersten Steuerfeder nach einem entsprechenden Vorlauf ankoppelbar angeordnet ist.

Hier, im Federsystem gemäß der Erfindung als Steuerfeder verwendete Federn mit Knickcharakteristik sind an sich bekannt. Genannt seien beispielsweise und vorzugsweise bistabile Federn, d.h. Federn mit zwei stabilen Endlagen wie beispielsweise überschnappende Blattfedern oder Feder-Hebel-Mechanismen, überdehnbare Spiralzugfedern oder Gummifedern mit Wandknickeffekt, beispielsweise Schaumstoffe oder Hohlkammerpuffer, die nach Überschreiten einer kritischen Belastung bzw. eines kritischen Federweges ihre Elastizität durch ein Einknicken der elastisch federnden Wände weitgehend verlieren.

Die Feder gemäß der Erfindung ist nach einer weiteren Ausgestaltung der Erfindung vorzugsweise nur aus Gummifedern aufgebaut, wobei als Tragfeder vorzugsweise ein Lochgummipuffer und als Steuerfeder ein Hohlkammer-Knicklager dient. Unter einem Lochgummipuffer wird dabei ein gebräuchlicher Vollgummipuffer verstanden, der mit Kanälen und/oder Hohlräumen durchsetzt ist, die, obwohl stark verformbar und im Grenzwert zusammendrückbar, keine Wandknickeffekte zeigen. Unter einem Hohlkammerknicklager wird beispielsweise ein Gummischlauchabschnitt verstanden, der bei axialer Belastung mit steilem Verlauf der Federkennlinie durch Stauchen des Zylindermantels zunächst komprimierbar ist, bis die Zylinderwände durch geringfügige Ungleichverteilungen der Spannungslinien im Werkstoff seitlich, auswärts oder einwärts wegknicken und dadurch der Nutzlast praktisch keine nennenswerte Rückstellkraft mehr entgegensetzen. Die Feder gemäß der Erfindung ist vorzugsweise als Druckfeder oder Auflagerfeder ausgebildet, kann aber ohne weiteres als Zugfedersystem ausgestaltet sein.

Die Feder gemäß der Erfindung wird vorzugsweise zum Bau von Motorlagern für Kraftfahrzeuge verwendet.

Die Erfindung ist im folgenden anhand von Ausführungsbeispielen in Verbindung mit den Zeichnungen näher erläutert. Es zeigen:

Fig. 1 in schematischer Darstellung Kennlinien des Federsystems gemäß der Erfindung;

Fig. 2 in schematischer Darstellung einen typischen Kennlinienverlauf für die Steuerfeder;

Fig. 3 ein erstes Ausführungsbeispiel der Feder in funktionsschematischer Darstellung; und

Fig. 4 ein zweites Ausführungsbeispiel der Erfindung, ebenfalls in funktionsschematisch erläuternder Darstellung.

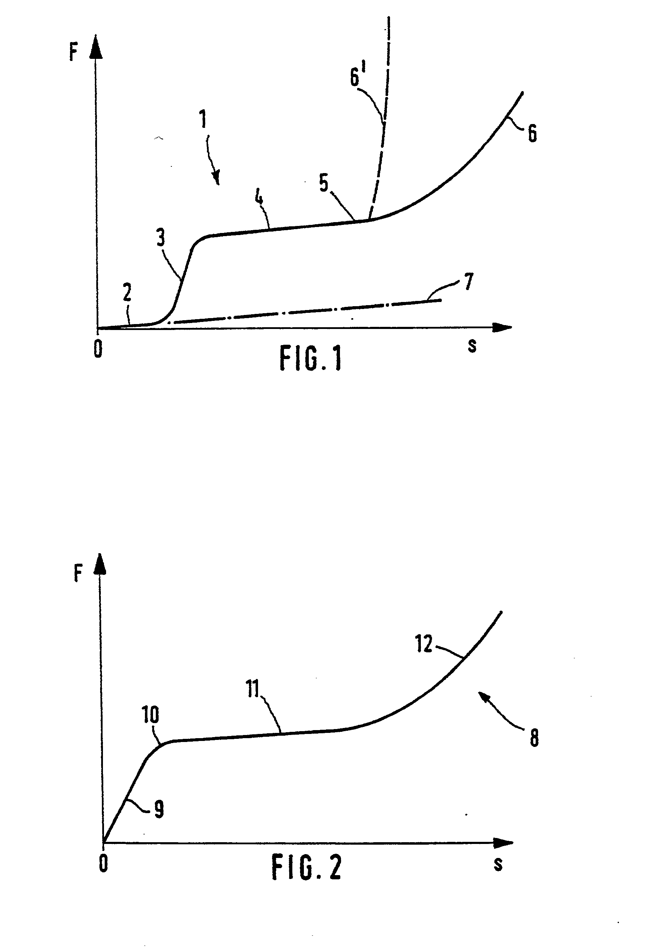

In der Fig. 1 ist schematisch ein Federkennliniensystem dargestellt, bei dem die Federkraft F als Funktion des Federweges s aufgetragen ist. Der typische Verlauf einer Kennlinie 1 der Feder gemäß der Erfindung ist mit ausgezogener Linie dargestellt. Nach einem anfänglichen weichen linearen Abschnitt 2 der Kennlinie tritt ein mehr oder minder steil oder sprungartig ausgeprägter Anstieg der Kennlinie ein, der dann bereits nach kurzem Federweg in den anschließenden Abschnitt 4 übergeht, der den eigentlichen linearen Arbeitsbereich der Feder darstellt. Dabei stellen die zumindest im wesentlichen zueinander parallel versetzten Abschnitte 2 und 4 Abschnitte ein und desselben linearen Kennlinienverlaufs der weichen Tragfeder der Feder gemäß der Erfindung dar. Daß in den praktischen Ausführungen der Feder die Abschnitte 2 und 4 tatsächlich nicht exakt parallel zueinander verlaufen werden, liegt daran, daß die Steuerfeder, die in Addition zum linearen Anteil der Tragfeder wesentlich und bestimmend den Verlauf des Sprungabschnitts 3 der Federkennlinie 1 festlegt, auch nach dem Kennlinienknick meist noch eine gewisse Restelastizität besitzt, die sich zur Elastizität, genauer gesagt Federkonstanten, des linearen Bereichs der Tragfeder addiert. Im Rahmen der vorliegenden Beschreibung der Erfindung ist jedoch der Kürze halber von einem Sprung 3 im linearen Bereich 2,4 der Federkennlinie gesprochen.

Für die Erfindung nicht mehr wesentlich ist der Verlauf der Kennlinie nach dem Endpunkt 5 des linearen Abschnitts 4. Dieser Verlauf kann entweder wie mit der durchgezogenen Linie im Abschnitt 6 angedeutet der übliche progressive Verlauf sein, der bei einer Materialverpressung von Gummipuffern auftritt, oder kann in der durch eine unterbrochene Linie im Abschnitt 6' der Kennlinie 1 dargestellt durch einen Anschlag begrenzt sein.

In der Fig. 1 ist weiterhin der weiche und über einen weiten Bereich lineare Verlauf der Kennlinie 7 der Tragfeder des Federsystems gemäß der Erfindung gezeigt.

In der Fig. 2 ist der typische Verlauf der Kennlinie 8 eines Hohlkammer-Knicklagers aus Gummi dargestellt. Nach einem relativ steilen und weitgehend linearen Anfangsabschnitt 9 der Kennlinie 8 tritt bei einem meist scharf ausgeprägten Knickpunkt 10 ein Einknicken der Kammerwand oder der Kammerwände der Kammer ein, wodurch die Feder in einem anschließenden Abschnitt 11 praktisch ihre gesamte Elastizität bis zu dem Punkt verliert, ab dem nach dem weitgehend vollständigen Zusammendrücken der im Federkörper kollabierten Kammer eine Materialverpressung des Elastomers erfolgt, was sich in einem Abschnitt 12 mit progressivem Kennlinienverlauf zu erkennen gibt.

Aus den funktionsschematischen Darstellungen in den Figuren 1 und 2 ist ohne weiteres entnehmbar, daß die Kennlinie 1 der Feder gemäß der Erfindung einer additiven Überlagerung der Kennlinie 7 der weichen Tragfeder und der Kennlinie 8 der Steuerfeder entspricht.

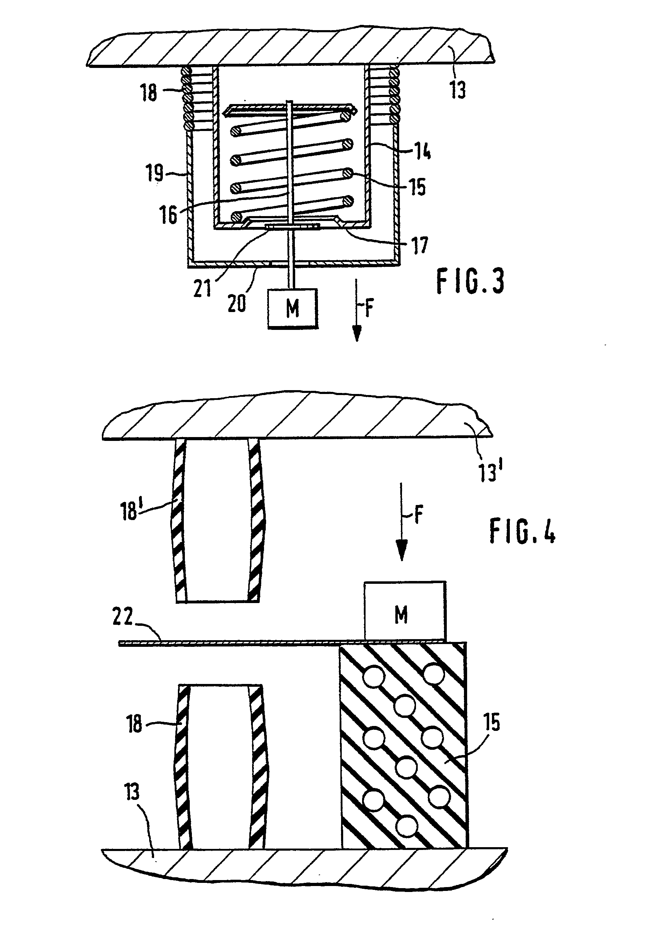

In den Figuren 3 und 4 sind ebenfalls funktionsschematisch zwei Ausführungsbeispiele der Feder gemäß der Erfindung gezeigt, die die in Fig. 1 dargestellte Kennlinie 1 aufweisen.

In der Fig. 3 ist ein ortsfestes Bezugssystem 13, beispielsweise ein Rahmenteil eines Kraftfahrzeuges, dargestellt, an dem über einen Bügel 14 eine weiche Tragfeder 15 abgestützt ist. Die Tragfeder 15 ist eine Spiralfeder aus Stahl, die für eine Druckbelastung ausgelegt ist. Am Kopf der Tragfeder 15 ist über ein Gestänge 16 unter dem Widerlager 17 der Tragfeder 15 eine abzufedernde Masse M aufgehängt.

Das Druckfedersystem 14,15,16 ist koaxial von einer Steuerfeder 18 umgeben, die als Zugfeder, und zwar als Spiralfeder aus Stahl, ausgebildet und ebenfalls am Bezugssystem 13 befestigt ist. Am unteren Fußpunkt der als Zugfeder ausgebildeten Steuerfeder 18 ist ein Bügel 19 befestigt, der einen flanschartig einwärts vorspringenden Anschlag 20 aufweist, auf dem bei Kompression der Tragfeder 15 ein Anschlagteller 21 zur Auflage gelangen kann, der am Traggestänge 16 der Tragfeder 15 befestigt ist.

Wenn die Masse M in Richtung des Pfeils F mit einer abwärts gerichteten Beschleunigung beaufschlagt wird, wird die in die Feder 15, 18 eingeleitete Energie zunächst weich und linear in die Tragfeder 15 eingeleitet. Dieser Vorgang entspricht dem Abschnitt 2 derin Fig. 1 gezeigten Kennlinie 1. Wenn der Teller 21 auf dem Anschlag 20 aufliegt, wird die in das Federsystem 15,18 eingeleitete Energie jetzt zusätzlich durch die harte Zugfeder 18 abgefedert, so daß die Federkennlinie des Gesamtsystems 15,18 den in der Kennlinie 1 der Fig. 1 dargestellten Sprung 3 aufweist. Die Zugfeder 18 ist dabei so ausgebildet, daß sie nach bereits kurzem Auszug, also bereits relativ kurzem Federweg ihre Federspannung durch Überdehnung verliert, so daß bei weiterer Abwärtsbeschleunigung der Masse M die Abfederung dieses Vorgangs wiederum fast ausschließlich über den linearen Arbeitsbereich der Tragfeder 15 erfolgt. Gegenüber der aus der Tragfeder 15 wirkenden Federkonstanten ist die Rest-Federkonstante der überdehnten Spiralfeder 18, die sich zur Federkonstante der Druckfeder 15 addiert, praktisch zu vernachlässigen. Dieser Arbeitsbereich entspricht dem Abschnitt 4 der in Fig. 1 gezeigten Federkennlinie 1. Aus der Fig. 1 ist dabei auch ohne weiteres ersichtlich, daß ohne die zusätzliche Zugfeder 18 die durchgehend weiche Abfederung auf der Kennlinie 7, die der Tragfeder 15 entspricht, ein rund doppelt so weiter Federweg erforderlich wäre als dies durch die Wirkung der Steuerfeder 18 und den durch diese verursachten Sprung 3 in der Kennlinie 1 tatsächlich erforderlich ist und zwar ohne die extrem weiche Abfederung im Arbeitsbereich 4 der Kennlinie 1, der im wesentlichen einer Parallelverschiebung der Kennlinie 7 entspricht, hinnehmen zu müssen.

Ein zweites Ausführungsbeispiel einer Feder, die die in Fig. 1 gezeigte Kennlinie zeigt, und zwar auch in dem in Fig. 1 nicht gezeigten drehspiegelsymmetri-

schen Abschnitt des Rückschwingbereichs, also den Bereich durch den Nullpunkt hindurch auf die Seite negativer Federwege, ist in der Fig. 4 dargestellt. Die Tragfeder 15 ist als Lochgummipuffer, die Steuerfeder 18 als Hohlkammer-Knicklager aus Gummi ausgebildet. Zusätzlich zu dieser ersten Steuerfeder ist eine zweite Steuerfeder 18' vorgesehen, die in ihrer Ausgestaltung und ihren Kenndaten zur ersten Steuerfeder 18 identisch ist. Diese drei Elemente der in Fig. 4 gezeigten Feder sind in der dargestellten Weise an einem Bezugssystem 13,13', beispielsweise einer Rahmenklammer eines Kraftfahrzeugs, gehaltert. Mit dem Kopf der Tragfeder 15 ist eine Koppelplatte 22 verbunden, die frei in einen Zwischenraum hineinragt, der zwischen den beiden stirnseitig einander mit Abstand und koaxial gegenüberliegend angeordneten Steuerfedern 18,18' freigelassen ist. Dabei sind die Einzelteile 15,22,18,18' dieses Federsystems so bemessen und ausgerichtet, daß das Koppelblech 22 bei entspannter Tragfeder 15 genau in die Mitte des axialen stirnseitigen Abstands der beiden Steuerfedern 18,18' hineinragt. Auf der Tragfeder 15 ist eine Schwingungen ausgesetzte Masse M gelagert.

Wenn die Masse M eine Beschleunigung in Richtung des Pfeils F erfährt, erfolgt die Abfederung zunächst sehr weich und linear ausschließlich über die Tragfeder 15, und zwar so lange, bis das Koppelblech 22 auf dem oberen Rand der unteren Steuerfeder 18 aufliegt. Diese setzt dann der abzufedernden Masse eine mit dem weiteren abwärts gerichteten Federweg steil ansteigende Federkraft entgegen, die aus der Kompression der Gummiwände des aus Gummi gefertigten Hohlkammerknicklagers stammt. Bereits nach kurzem Federweg knicken die Wände des Steuerlagers 18 jedoch nach außen, so daß dem Federvorgang aus der Steuerfeder 18 praktisch keine elastisch wirksame Federenergie mehr entgegengesetzt wird. Die restliche Abfederung des Einschwingvorganges der Masse M erfolgt dann nur noch über den weichen linearen, dem eigentlichen Arbeitsbereich entsprechenden Abschnitt der Federkennlinie der Tragfeder 15. Nach Abschluß der Einleitung der Energie der schwingenden Masse M in das Federsystem erfolgt die Rückstellung der Tragfeder 15, der die Steuerfeder 18 über die Kopplung 22 folgt, wobei die um den Betrag der in der Feder getilgten Arbeit verminderte dynamische Energie wieder der Masse M erteilt wird. Mit dieser Energie schwingt die Masse dann in der Darstellung der Fig. 4 über den in Fig. 4 gezeigten Nullpunkt des Systems nach oben hinaus, bezogen auf die in Fig. 4 gezeigte Nullage des Systems, also in Richtung negativer Federwege, und zwar in der gleichen Weise, wie vorstehend für den Einschwingvorgang beschrieben, da das Gesamtfedersystem zumindest im wesentlichen und praktisch symmetrisch ausgelegt ist. Wie oft und mit welchen Amplituden sich dieser Vorgang des Hin- und Herschwingens dann wiederholt, ist eine Frage der Dämpfung des Federsystems, die im Rahmen der vorliegenden Erfindung von sekundärer Bedeutung ist. Erfindungswesentlich ist lediglich die Lösung der Aufgabe, eine zur trägen Masse des Bezugssystems 13 weiche Abfederung einer relativ großen Masse M bei verkürzten Federwegen zu erzielen, wobei diese Aufgabe in der vorstehend dargestellten Weise durch den Sprung 3 der Kennlinie 1 des Federsystems gelöst wird. In den hier beschriebenen Ausführungsbeispielen wird dieser Sprung 3 der Kennlinie durch zusätzliche Steuerfedern 18 bzw. 18 und 18', gelöst, die als Knickfedern prinzipiell beliebiger Bauart ausgebildet sind.

Der Fachmann erkennt dabei ohne weiteres, daß er in der Realisierung der in der Fig. 1 gezeigten typischen und erfindungswesentlichen Federkennlinie 1 nicht auf die hier in den Figuren 3 und 4 als funktionsprinzipielle Ausführungsbeispiele dargestellten Realisierungen angewiesen ist, sondern Federkennlinien der in Fig. 1 gezeigten Art mit einem Sprung 3 im linearen Arbeitsbereich 2,4 ohne weiteres auch mit elektronischen Steuerungsmitteln in elektromagnetischen Federsystemen oder auch mit Ventilsteuerungen, beispielsweise pneumatischen Ventilsteuerungen, in pneumatischen Federsystemen einstellen kann.

**Patentansprüche**

1. Feder gekennzeichnet durch die Kombination einer Tragfeder (15) mit weitem linearen Kennlinienverlauf (2, 4) mit einer Steuerfeder (18) mit einer gegenüber der Tragfeder (15) zunächst steil (g), und dann nach überschreiten eines kritischen Federwegs (10) praktisch horizontal (11) verlaufenden Kennlinie (8), wobei die beiden Federn (15, 18) in der Weise parallelgeschaltet sind, daß die Ankopplung der Steuerfeder (18) erst nach einem vorgewählten Federweg (2) der Tragfeder (15) erfolgt, so daß sich insgesamt ein Sprung (3) im linearen Bereich (2, 4) der Kennlinie (1) der Feder ergibt.

2. Feder nach Anspruch 1 dadurch gekennzeichnet, daß die Kennlinie (1) symmetrisch zum Nullpunkt des Kennliniensystems verläuft, die Feder also symmetrisch schwingfähig ist.

3. Feder nach Anspruch 2, gekennzeichnet durch eine in ihren Federkenndaten und in ihrer Ankopplung an die Tragfeder (15) zur ersten Steuerfeder (18) symmetrische zweite Steuerfeder (18') im Über- oder Rückschwingbereich der Tragfeder.

4. Feder nach einem der Ansprüche 1 bis 3, dadurch gekennzeichnet, daß die Steuerfeder (18; 18') eine bistabile Feder, eine Spiralzugfeder oder eine Gummifeder mit Wandknickeffekt ist.

5. Feder nach einem der Ansprüche 1 bis 3, dadurch gekennzeichnet, daß sowohl die Tragfeder (15) als auch die Steuerfeder oder die Steuerfedern (18; 18') Gummifedern sind.

6. Feder nach Anspruch 5, dadurch gekennzeichnet, daß die Tragfeder (15) ein Lochgummipuffer und die Steuerfeder bzw. die Steuerfedern (18; 18') Knicklager sind.

7. Verfahren zum weichen Abfedern von im Vergleich zum angekoppelten Bezugssystem großen Massen durch eine Federn oder ein Federsystem mit einem im Arbeitsbereich im wesentlichen linearen Kennlinienverlauf, dadurch gekennzeichnet, daß die in das Federsystem eingeleitete Energie in einem ersten Bereich des linearen Kennlinienverlaufes der Feder oder des Federsystems zu Beginn des Federweges und damit der Federverformung weich, dann hart und in der Schlußphase der Federverformung und damit gegen Ende des Federweges in einem zweiten Bereich des linearen Arbeitsbereiches wiederum weich abgefedert wird, wobei sich insgesamt im Arbeitsbereich ein Sprung im linearen Kennlinienverlauf ergibt.

8. Verfahren nach Anspruch 7, dadurch gekennzeichnet, daß ungefähr 40 bis 60% der insgesamt in das Federsystem eingeleiteten Energie hart, und zwar auf 1 bis 20% des gesamten genutzen Federweges des linearen Kennlinienbereiches abgefedert werden.

9. Verfahren nach einem der Ansprüche 7 oder 8, dadurch gekennzeichnet, daß ungefähr 1 bis 10% der insgesamt in das Federsystem eingeleiteten Energie in der Anfangsphase der linearen Federverformung weich abgefedert werden.

**Revendications**

1. Ressort, caractérisé par l'association d'un ressort porteur (15) ayant une caractéristique (2, 4) de tracé largement linéaire et d'un ressort directeur (18) ayant une caractéristique (8) qui, comparée à celle du ressort porteur (15), a d'abord une forte pente (9), puis, après dépassement d'un déplacement élastique critique (10), est pratiquement horizontale (11), les deux ressorts (15, 18) étant montés parallèlement de telle manière que l'accouplement du ressort directeur (18) ne se produit qu'à la fin d'un déplacement élastique déterminé (2) du ressort porteur (15), ce qui, dans l'ensemble, donne un ressort (3) dans le domaine linéaire (2, 4) de la caractéristique.

2. Ressort selon la revendication 1, caractérisé en ce que la caractéristique (1) est symétrique par rapport au point zéro du système de caractéristique, c'est-à-dire que le ressort peut osciller d'une manière symétrique.

3. Ressort selon la revendication 2, caractérisé en ce qu'il comporte, dans le domaine d'oscillations dépassées ou en retour, un deuxième ressort directeur (18') symétrique, du premier ressort directeur (18) en ce qui concerne ses caractéristiques et son accouplement avec le ressort porteur (15).

4. Ressort selon une des revendications 1 à 3, caractérisé en ce que le ressort directeur (18, 18') est un ressort bistable, un ressort de traction en spirale ou un ressort en caoutchouc à effet de flambage de paroi.

5. Ressort selon une des revendications 1 à 3, caractérisé en ce que le ressort porteur (15) et le ou les ressorts directeurs (18, 18') sont des ressorts en caoutchouc.

6. Ressort selon la revendication 5, caractérisé en ce que le ressort porteur (15) est un amortisseur en caoutchouc perforé et que le ou les ressorts directeurs (18, 18') sont des ressorts de flambage.

7. Procédé pour l'amortissement élastique de masses importantes par rapport au système de référence auquel elles sont accouplées au moyen d'un ressort ou d'un système de ressorts présentant dans le domaine de travail un tracé de caractéristique essentiellement linéaire, caractérisé en ce que l'énergie fournie au système de ressorts est amortie élastiquement d'une manière molle dans un premier domaine du tracé linéaire de la caractéristique du ressort ou du système de ressorts au début du déplacement élastique, c'est-à-dire de la déformation élastique, puis d'une manière dure, et de nouveau d'une manière molle dans la phase finale de la déformation élastique, c'est-à-dire vers la fin du déplacement élastique dans un deuxième domaine du domaine de travail linéaire, ce qui, dans l'ensemble, donne un ressort dans le tracé linéaire de la caractéristique.

8. Procédé selon la revendication 7, caractérisé en ce qu'une proportion d'environ 40 à 60 % de la totalité de l'énergie fournie au système de ressorts est amortie élastiquement d'une manière dure sur 1 à 20 % de la totalité du déplacement élastique correspondant au domaine linéaire de la caractéristique.

9. Procédé selon l'une des revendications 7 ou 8, caractérisé en ce qu'une proportion d'environ 1 à 10% de l'énergie totale fournie au système de ressorts est amortie d'une manière molle dans la phase initiale de la déformation élastique linéaire.

**Claims**

1. A spring device comprising a combination of a suspension spring (15) having a wide linear section in the forcedeflection curve with a control spring (18) comprising in its force-deflection curve, with respect to the suspension spring (15), an initial steep rise (9) which after surpassing a critical deflection (10) of the spring is turning into a substantially horizontal section (11) of the force-deflection curve (8), said two springs (15, 18) being coupled in parallel in such a way that the coupling of the control spring (18) only takes place after a predetermined initial path of an uncoupled deflection (2) of the suspension spring (15), so that as a result an abrupt steep rise (3) within the linear range (2, 4) of the forcedeflection curve (1) of the spring device is achieved.

2. A spring device according to claim 1, characterized in that the force-deflection curve (1) is symmetric with respect to the origin of the system, i.e. the spring is capable of oscillating symmetrically.

3. A spring device according to claim 2, characterized by a second control spring (18') arranged symmetrically to the first control spring (18) in the negative deflection range of the suspension spring, said second control spring (18') being symmetric with respect to the first control spring (18) as to its force-deflection curve and to its suspension spring coupling characteristics.

4. A spring device according to one of the claims 1 to 3, characterized in that the control spring (18; 18') is a bistable spring, a spiral tension spring or a rubber spring having a wall-kinking effect.

5. A spring device according to one of the claims 1 to 3, characterized in that both the suspension spring (15) and the control spring or the control springs (18; 18'), respectively, are made of rubber.

6. A spring device according to claim 5, characterized in that the suspension spring (15) is a rubber buffer having bores and/or cavities therein and the control spring or the control springs (18; 18'), respectively, are kinking mountings.

7. A method for softly spring mounting masses which are heavy in comparison to the coupled reference system by means of a spring device or a spring system comprising a substantially linear force-deflection curve within its operational range characterized in that the energy introduced into the spring system is dissipated softly at the beginning of the spring deflection and therefore at the beginning of the spring stroke in a first section of the linear force-deflection curve of the spring device or the spring system, then rigidly and again softly during the end-phase of the spring deflection and therefore at the end of the spring stroke in a second section of the linear operational range, so that as a result an abrupt steep rise within the operational range of the linear range of the force-deflection curve is achieved.

8. A method according to claim 7, characterized in that about 40 to 60 % of the total energy introduced into the spring system is dissipated rigidly during 1 to 20% of the total spring stroke used of the linear section of the force-deflection curve.

9. A method according to one of the claims 7 or 8, characterized in that about 1 to 10% of the total energy introduced into the spring system is dissipated softly during the initial phase of the linear spring deflection.

FIG.1

FIG.2

FIG.3

FIG.4